# EUROPEAN PATENT SPECIFICATION

(11) **EP 3 814 458 B1**
(45) Date of publication and mention of the grant of the patent: **17.07.2024**
(21) Application number: 19807974.1
(22) Date of filing: 24.05.2019
(51) Int. Cl.: C10L 5/44, C10L 5/36, C10L 10/08

(54) **METHOD INCLUDING ADDITIVE FOR THE PRODUCTION OF WOOD PELLETS**
METHODE MIT ADDITIV ZUR HERSTELLUNG VON HOLZPELLETS
MÉTHODE AVEC UN ADDITIF POUR LA PRODUCTION DE GRANULÉS DE BOIS

(30) Priority: 25.05.2018 US 201815990309
(43) Date of publication of application: 05.05.2021
(73) Proprietor: Arr-Maz Products, L.P., Mulberry, FL 33860 (US)
(72) Inventor: CHEN, Frank Bor-Her, Lakeland, Florida 33813 (US); NAOULI, Nabil, Lithia, Florida 33547 (US); WILLIAMS, Paul A., Valrico, Florida 33596 (US); SULDICKAS, John, Lakeland, Florida 33812 (US)
(74) Representative: Weickmann & Weickmann PartmbB
(86) International application number: PCT/US2019/033985
(87) International publication number: WO 2019/227031

(56) References cited:
- WO-A1-2018/231552
- CA-A1- 2 879 247
- GB-A- 2 494 293
- GB-A- 2 494 293
- KR-B1- 101 579 930
- US-A- 4 524 024
- US-A1- 2015 113 868
- US-A1- 2015 203 774
- US-B1- 6 589 442

## Description

### BACKGROUND OF THE INVENTION

### Field of the Invention.

This invention relates generally to a method with an additive used in the product of wood pellets, and more particularly, but not by way of limitation, to a method with an additive that improves production of wood pellets through increased pellet mill throughput and/or increased pellet die service life.

### Description of the Related Art.

Wood pellets are often used as fuel for industrial power plants and for residential uses, such as barbeque grill fuel and other uses. Such wood pellets, however, break easily and tend to generate dust upon impact and abrasion, such as during shipping and handling. In fact, for industrial use, such wood pellets are designed to be ground up prior to use. Dust can be a major hazard at places where wood pellets are handled in bulk, such as at ports during loading and unloading, causing concerns about human safety, fire hazard, and fines by the port authority.
GB 2 494 293 describes a fuel composition in the form of a briquette or a wood pellet, comprising a hardwood and/or a softwood and an additive which comprises a binder system resulting in formation of a fuel composition having low dust fines and high calorific value.
CA 2 879 247 A1 discloses a method for making a pellet form torrefied wood or from white wood comprising the steps of (a) mixing the wood with a two-component binder, comprising a plasticizer selected from the group consisting of tall oil pitch, fatty acids, rosin, vegetable oil, animal oils and corn protein and lignin and (b) extruding the mixture to form a pellet.

In addressing this issue, the inventors of the present invention discovered another challenge of wood pellet manufacturers: how to increase production rates without major capital expansion. Increasing the throughput of pellet mill/pellet production may allow manufacturers to address this challenge. The ability to boost production may also significantly increase the profit of the pellet manufacturers.

Based on the foregoing, it is desirable to provide an additive that increases throughput in the production of wood pellets.

### SUMMARY OF THE INVENTION

The present invention is defined by the attached set of claims.

In general, in a first aspect, the invention relates to a method of producing wood pellets comprising applying a booster, which comprises tall oil pitch and tall oil head, to wood prior to pelletizing the wood into wood pellets, where the application of the booster results in increased throughput of the wood pellets compared to throughput of wood pellets formed from wood without the booster. The booster may comprise 85% tall oil pitch and 15% tall oil head. The booster may be applied to the wood meal at a rate of 0.01 to 2 wt. % of the wood, or more particularly at a rate of 0.1 wt.% of the wood.

The booster may lubricate the wood and allow the wood pellets to be formed with less energy than would be required to form wood pellets from wood without the booster.

The method may further comprise preparing the wood meal for pellet formation prior to applying the booster to the wood meal. Additionally or alternately, the method may further comprise preparing the wood meal for pellet formation after applying the booster to the wood meal, and/or applying the booster to wood chips prior to processing the wood chips into the wood meal. Preparing the wood meal may comprise grinding the wood meal to a desired size distribution and/or conditioning the wood meal. Forming the wood into wood pellets may comprise placing the wood into a pelletizing mill, forcing the wood into a die, and compressing the wood into wood pellets. Applying the booster to the wood may comprise spraying the booster onto the wood.

The application of the booster may not result in decreased quality of the wood pellets compared wood pellets formed from wood without the booster. The booster may not increase the elasticity of the wood pellets. The booster may not function as a binder within the wood pellets.

Wood pellets produced according to the foregoing process and the booster used in the foregoing process are also described herein.

### DETAILED DESCRIPTION OF THE INVENTION

The devices and methods discussed herein are merely illustrative of specific manners in which to make and use this invention and are not to be interpreted as limiting in scope.

While the devices and methods have been described with a certain degree of particularity, it is to be noted that many modifications may be made in the details of the construction and the arrangement of the devices and components without departing from the scope of this disclosure. It is understood that the devices and methods are not limited to the embodiments set forth herein for purposes of exemplification.

In general, in a first aspect, the invention relates to a method that uses a novel throughput booster for use in the wood pellet manufacturing process. While reference is made throughout to wood pellets and the wood pellet manufacturing process, the same booster may be utilized in the manufacture of other materials to similar effect. In particular, the booster may be used in the production of other biomasses and/or energy pellets, such as in the production of bagasse.

The booster may increase pellet mill production throughput. The booster may also increase pellet quality preservation, which feature is normally difficult to attain. The booster may lower the energy required to form the pellet in the pellet die, for example by lubricating the wood meal that is being forced into the die, which may extend the service life of the pellet die.

The wood pellet manufacture process may begin by preparing wood chips into wood meal. This may include grinding soft wood, such as pine, or hard wood, such as beech, to a particular size distribution to generate the wood meal. The wood meal may then be conditioned, such as by steam. The conditioned wood meal may then be placed into a pelletizing mill, where it is forced into a die and compressed into wood pellets.

The booster in the method of the present invention may be applied to the wood meal right after conditioning and before the wood meal is placed into the pelletizing mill. Additionally or alternately, the booster in the method of the present invention may be applied to the wood meal prior to conditioning. Additionally or alternately, the booster in the method of the present invention may be applied to the wood chips prior to processing the wood chips into wood meal.

The booster may be applied via spraying, or via any other desired form of application. For example, the booster may be applied in a continuous manner through spraying, dripping, and/or dipping the conditioned wood chips/meal while on a moving belt or while falling, or may be applied using a rotary drum mixer, a ribbon blender with soft ribbon and soft wall, a continuous dip coater, or other machine.

The booster in the method of the present invention comprises tall oil and tall oil head. The booster may comprise one or more of the following: pine chemical fractions such as crude tall oil, distilled tall oil, tall oil fatty acids, tall oil rosin, tall oil pitch, wood rosin, gum rosin, and/or tall oil heads; lignin or hydrophobic lignin (functionalized lignin with hydrophobic chain); starch; non-food use sustainable wax such as natural alcohol bottoms; cellulose derivatives, hemicellulose, animal and/or vegetable fatty acids and/or oils; and/or any combination thereof. In particular, the booster may be a blend of tall oil pitch and tall oil head. More particularly, the booster may be a blend of 85% tall oil pitch and 15% tall oil head. The booster may be applied at a dosage rate of 0.01 to 2 wt.% of the wood meal. More particularly, the booster may be applied at a dosage rate of 0.1 wt.%. The use of the booster may result in increased throughput. The increase in throughput may not be associated with decreased quality of the resultant wood pellets, either in terms of percent fines, percent moisture content, bulk density, or mechanical durability.

The booster may be used in conjunction with further optimization of the pellet manufacture process. For example, the booster may be used in conjunction with die modification or other process changes that may be combined to increase throughput and also make quality pellets.

The resultant wood pellets may be 1" long and ¼" in diameter, or any other desired size. They may be made of compressed wood. The wood pellets may not comprise torrified wood.

The booster may not increase the elasticity of the wood pellets. The booster may be heated for mixing and/or application but may still be spreadable after cooling. The booster may not have the appropriate properties and/or may not be applied in appropriate quantities to function as a binder within the wood pellets. In particular, less of the booster may be used than the amount of similar material required for use as or in a binder. This decreases the cost of the finished product, as compared to a wood pellet with the same materials used as a binder.

The booster and resultant wood pellets may be green and sustainable. Alternately, conventional non-green and non-sustainable booster elements may be applied, either alone or in combination with green and sustainable elements.

### EXAMPLES:

In both examples, testing was conducted at a wood pellet pilot plant with a throughput of approximately 300 kg/hour. A 6 mm die with a compression ratio of 1 to 4 was used. In the plant, shaves of soft wood, namely pine, or hardwood, namely beech, were pre-grinded in a hammer mill to have a particle size distribution of greater than 90% with particles smaller than 1.345 mm. The wood meal was conditioned using steam, and then a wood pellet throughput booster designated BOOSTER SAMPLE A was sprayed onto the conditioned wood meal before it entered into the pelletizing mill. Wood pellets collected at the outlet of the pelletizing mill were subjected to quality tests, including determining percent fines, mechanical durability, bulk density, and percent moisture content.

BOOSTER SAMPLE A had a composition of 85% tall oil pitch and 15% tall oil head.

Example 1: Hardwood (beech) based wood meal was used for this test. The dosage of BOOSTER SAMPLE A was 0.1 wt% of the wood meal. The results are summarized in Table 1 below.

**Table 1: Summary Qualities of the Hardwood based Wood pellets (0.1 wt. % BOOSTER SAMPLE A Booster)**

| Type of Wood Pellets | Throughput (kg/hr) | % Fines | % Moisture Content of the Pellets Hot | % Moisture Content of the Pellets after Cooling | Bulk Density (kg/m3) Cool | % Mechanical Durability |
|---|---|---|---|---|---|---|
| Control (No Booster) | 298 | 0.42 | 10 | 7.0 | 668 | 98.0 |
| With 0.1 Wt. % Booster | 298 | 0.50 | 9.5 | 7.6 | 668 | 98.4 |
| With 0.1 Wt. % Booster | 340 | 0.53 | 6.6 | 4.8 | 672 | 98.3 |

Wood pellet production throughput was increased approximately 14.1% without sacrificing the quality in percent fines, percent moisture content, bulk density, and mechanical durability. Typically, wood pellets should have a percent fines less than 1.75, percent moisture content less than 8.5, bulk density greater than 620, and mechanical durability greater than 98%. The wood pellets produced with increased throughput remained within these parameters.

Example 2: Softwood (pine) based wood meal was used for this test. The dosage of BOOSTER SAMPLE A was 0.1 wt% of the wood meal. The results are summarized in Table 2 below.

**Table 2: Summary Qualities of the Softwood based Wood pellets (0.1 wt. % BOOSTER SAMPLE A Booster)**

| Type of Wood Pellets | Throughput (kg/hr) | % Fines | % Moisture Content of the Pellets Hot | % Moisture Content of the Pellets after Cooling | Bulk Density (kg/m3) Cool | % Mechanical Durability |
|---|---|---|---|---|---|---|
| Control (No Booster) | 350 | 0.5 | 7 | 3.6 | 684 | 97.89 |
| With 0.1 Wt. % Booster | 350 | 0.8 | 7 | 3.5 | 672 | 95.47 |
| With 0.1Wt. % Booster | 400 | 1.1 | 6.8 | 3.7 | 694 | 97.60 |
| With 0.1 Wt. % Booster | 430 | 0.50 | 6.5 | 3.5 | 684 | 97.91 |

Wood pellet production throughput was increased approximately 23% without sacrificing the quality in percent fines, percent moisture content, and bulk density, which all remained within typically desirable parameters. Mechanical durability is inherently lower with softwood than with hardwood, but the use of the booster did not result in a significant reduction in mechanical durability compared with the control. While this particular system was not optimized for soft wood pellets, further optimization to the process could increase mechanical durability and such changes are compatible with the use of the booster according to the present invention.

Whereas, the devices and methods have been described in relation to the drawings and claims, it should be understood that other and further modifications, apart from those shown or suggested herein, may be made within the scope of the present claims.

## Claims

1. A method of producing wood pellets comprising:
applying a booster to wood, preferably at a rate of 0.01 wt.% to 2 wt.% of the wood, more preferably at a rate of 0.1 wt.% of the wood; wherein the booster comprises tall oil pitch and tall oil head and
forming the wood into wood pellets,
where the application of the booster results in increased throughput of the wood pellets compared to throughput of wood pellets formed from wood without the booster, wherein the booster preferably lubricates the wood and allows the wood pellets to be formed with less energy than would be required to form wood pellets from wood without the booster.

2. The method of Claim 1 where the booster comprises:
85% tall oil pitch; and
15% tall oil head.

3. The method of Claim 1 further comprising preparing the wood for pellet formation prior to applying the booster to the wood,
where the wood is wood meal and where preparing the wood comprises grinding the wood meal to a desired size distribution prior to applying the booster to the wood meal, or
where the wood is wood meal and where preparing the wood comprises conditioning the wood meal prior to applying the booster to the wood, or
where the wood is wood chips, where preparing the wood comprises processing the wood chips to wood meal, and where applying the booster to the wood comprises applying the booster to the wood meal after processing the wood chips to wood meal,
where preparing the wood further comprises grinding the wood meal to a desired size distribution prior to applying the booster to the wood meal, or
where preparing the wood further comprises conditioning the wood meal prior to applying the booster to the wood meal, or further comprising grinding the wood meal to a desired size distribution after applying the booster to the wood meal, or further comprising conditioning the wood meal after applying the booster to the wood meal.

4. The method of Claim 1 further comprising preparing the wood for pellet formation after applying the booster to the wood, where preparing the wood for pellet formation comprises one or more of the following:
processing wood chips to wood meal;
grinding wood meal to a desired size distribution; and/or
conditioning wood meal.

5. The method of Claim 1 where forming the wood into wood pellets comprises placing the wood into a pelletizing mill, forcing the wood into a die, and compressing the wood into wood pellets.

6. The method of Claim 1 where applying the booster to the wood comprises spraying the booster onto the wood, or
where the application of the booster does not result in decreased quality of the wood pellets compared wood pellets formed from wood without the booster, or
where the booster does not increase the elasticity of the wood pellets, or
where the booster does not function as a binder within the wood pellets.

## Patentansprüche

1. Verfahren zur Herstellung von Holzpellets, umfassend:
Anwenden eines Boosters auf Holz, vorzugsweise in einer Rate von 0,01 Gew.-% bis 2 Gew.-% des Holzes, besonders bevorzugt in einer Rate von 0,1 Gew.-% des Holzes; wobei der Booster Tallölpech und Tallölkopf umfasst, und Formen des Holzes zu Holzpellets, wobei die Anwendung des Boosters zu einem erhöhten Durchsatz der Holzpellets im Vergleich zum Durchsatz von Holzpellets, die aus Holz ohne den Booster geformt werden, führt, wobei der Booster bevorzugt das Holz schmiert und es ermöglicht, dass die Holzpellets mit weniger Energie geformt werden, als zum Formen von Holzpellets aus Holz ohne den Booster erforderlich wäre.

2. Verfahren nach Anspruch 1, wobei der Booster umfasst:
85 % Tallölpech; und
15 % Tallölkopf.

3. Verfahren nach Anspruch 1, ferner umfassend das Vorbereiten des Holzes für die Pelletbildung vor dem Anwenden des Boosters auf das Holz, wobei es sich bei dem Holz um Holzmehl handelt und das Vorbereiten des Holzes das Mahlen des Holzmehls auf eine gewünschte Größenverteilung vor dem Anwenden des Boosters auf das Holzmehl umfasst, oder wobei es sich bei dem Holz um Holzmehl handelt und das Vorbereiten des Holzes das Konditionieren des Holzmehls vor dem Anwenden des Boosters auf das Holz umfasst, oder wobei es sich bei dem Holz um Holzschnitzel handelt, wobei das Vorbereiten des Holzes das Verarbeiten der Holzschnitzel zu Holzmehl umfasst, und wobei das Anwenden des Boosters auf das Holz das Anwenden des Boosters auf das Holzmehl nach dem Verarbeiten der Holzschnitzel zu Holzmehl umfasst, wobei die Vorbereitung des Holzes ferner das Mahlen des Holzmehls zu einer gewünschten Größenverteilung vor dem Anwenden des Boosters auf das Holzmehl umfasst, oder wobei die Vorbereitung des Holzes ferner das Konditionieren des Holzmehls vor dem Anwenden des Boosters auf das Holzmehl umfasst, oder ferner das Mahlen des Holzmehls zu einer gewünschten Größenverteilung nach dem Anwenden des Boosters auf das Holzmehl umfasst, oder ferner das Konditionieren des Holzmehls nach dem Anwenden des Boosters auf das Holzmehl umfasst.

4. Verfahren nach Anspruch 1, ferner umfassend das Vorbereiten des Holzes für die Pelletbildung nach dem Anwenden des Boosters auf das Holz, wobei das Vorbereiten des Holzes für die Pelletbildung eines oder mehrere der Folgenden umfasst:
Verarbeiten von Holzschnitzeln zu Holzmehl; Mahlen von Holzmehl auf eine gewünschte Größenverteilung; und/oder Konditionieren von Holzmehl.

5. Verfahren nach Anspruch 1, wobei das Formen des Holzes zu Holzpellets das Platzieren des Holzes in einer Pelletiermühle, das Forcieren des Holzes in eine Pressform und das Komprimieren des Holzes zu Holzpellets umfasst.

6. Verfahren nach Anspruch 1, wobei das Anwenden des Boosters auf das Holz das Aufsprühen des Boosters auf das Holz umfasst, oder bei dem die Anwendung des Boosters nicht zu einer verminderten Qualität der Holzpellets im Vergleich zu Holzpellets führt, die aus Holz ohne den Booster gebildet wurden, oder bei dem der Booster die Elastizität der Holzpellets nicht erhöht, oder bei dem der Booster nicht als Bindemittel innerhalb der Holzpellets wirkt.

## Revendications

1. Procédé de production de granulés de bois, consistant à
appliquer un renforçateur au bois, de préférence à un taux de 0,01 % en poids à 2 % en poids par rapport au bois, plus préférentiellement à un taux de 0,1 % en poids par rapport au bois ; le renforçateur comprenant de la poix d'huile de tall et un précurseur d'huile de tall ; et
transformer le bois en granulés de bois,
dans lequel
l'application du renforçateur permet d'augmenter le débit des granulés de bois par comparaison au débit des granulés de bois formés à partir de bois sans renforçateur,
de préférence, le renforçateur lubrifie le bois et permet de former les granulés de bois avec moins d'énergie que celle nécessaire pour former les granulés de bois à partir de bois sans renforçateur.

2. Procédé selon la revendication 1,
dans lequel le renforçateur comprend :
85% de poix d'huile de tall; et
15 % de précurseur d'huile de tall.

3. Procédé selon la revendication 1, consistant en outre à préparer le bois pour la formation de granulés avant l'application du renforçateur au bois, dans lequel
le bois est constitué de farine de bois et la préparation du bois comprend le broyage de la farine de bois pour obtenir une distribution granulométrique souhaitée avant l'application du renforçateur à la farine de bois, ou
le bois est constitué de farine de bois et la préparation du bois comprend le conditionnement de la farine de bois avant l'application du renforçateur au bois, ou
le bois est constitué de copeaux de bois et la préparation du bois comprend la transformation des copeaux de bois en farine de bois, et l'application du renforçateur au bois comprend l'application du renforçateur à la farine de bois après la transformation des copeaux de bois en farine de bois,
la préparation du bois comprend en outre le broyage de la farine de bois pour obtenir une distribution granulométrique souhaitée avant l'application du renforçateur à la farine de bois, ou
la préparation du bois comprend en outre le conditionnement de la farine de bois avant l'application du renforçateur à la farine de bois, ou comprend en outre le broyage de la farine de bois pour obtenir une distribution granulométrique souhaitée après l'application du renforçateur à la farine de bois, ou comprend en outre le conditionnement de la farine de bois après l'application du renforçateur à la farine de bois.

4. Procédé selon la revendication 1, consistant en outre à préparer le bois pour la formation de granulés après l'application du renforçateur au bois,
dans lequel la préparation du bois pour la formation de granulés comprend une ou plusieurs des étapes suivantes consistant à :
transformer les copeaux de bois en farine de bois ;
broyer la farine de bois pour obtenir une distribution granulométrique souhaitée ; et/ou
conditionner la farine de bois.

5. Procédé selon la revendication 1,
dans lequel la transformation du bois en granulés de bois consiste à placer le bois dans un broyeur de granulés, à pousser le bois dans une presse et à comprimer le bois en granulés de bois.

6. Procédé selon la revendication 1,
dans lequel l'application du renforçateur au bois consiste à pulvériser le renforçateur sur le bois, ou
l'application du renforçateur n'entraîne pas une diminution de la qualité des granulés de bois par comparaison aux granulés de bois formés à partir de bois sans renforçateur, ou
le renforçateur n'augmente pas l'élasticité des granulés de bois, ou
le renforçateur ne fait pas office de liant dans les granulés de bois.
